# EUROPÄISCHE PATENTSCHRIFT

(11) **EP 0 896 296 B1**
(45) Veröffentlichungstag und Bekanntmachung des Hinweises auf die Patenterteilung: **07.08.2002**
(21) Anmeldenummer: 98109678.7
(22) Anmeldetag: 27.05.1998
(51) Int. Cl.: G06K 19/00, G06K 19/06

(54) **Wertkarte für vorausbezahlte Werteinheiten und Verfahren zu deren Herstellung**
Prepaid value card and its manufacturing process
Carte de paiement pour unités de valuer prépayées et son procédé de fabrication

(30) Priorität: 05.08.1997 DE 19733876
(43) Veröffentlichungstag der Anmeldung: 10.02.1999
(73) Patentinhaber: Winter AG, 82140 Olching (DE)
(72) Erfinder: Hoffmeister, Wolfgang, 82140 Olching (DE); Kern, Dieter, 76228 Karlsruhe (DE)
(74) Vertreter: Turi, Michael, Dipl.-Phys.

(56) Entgegenhaltungen:
- DE-A- 2 126 285
- DE-A- 2 163 376
- DE-A- 2 819 390
- DE-A- 4 131 964
- DE-A- 4 206 742
- DE-A- 19 530 608
- DE-U- 29 703 110
- GB-A- 2 252 270
- GB-A- 2 305 393
- US-A- 3 950 013
- US-A- 4 738 473
- PATENT ABSTRACTS OF JAPAN vol. 1995, no. 01, 28. Februar 1995 (1995-02-28) & JP 06 278397 A (TOPPAN PRINTING CO LTD), 4. Oktober 1994 (1994-10-04)
- PATENT ABSTRACTS OF JAPAN vol. 1996, no. 12, 26. Dezember 1996 (1996-12-26) & JP 08 216577 A (TOPPAN PRINTING CO LTD), 27. August 1996 (1996-08-27)

## Beschreibung

Die Erfindung betrifft eine Wertkarte für vorausbezahlte Werteinheiten und ein Verfahren zu deren Herstellung.

Datenträger in Form von Speicher- bzw. Chip- oder Prozessorkarten sind heutzutage weit verbreitet. Sie bieten einerseits ein Optimum an Mobilität und andererseits eine angemessene Informationskapazität bei geringem Platzbedarf - sozusagen im Taschenformat. Daneben werden sie für den Verkauf von Waren und Dienstleistungen immer mehr zum idealen Werbeträger; bedingt durch die meist sehr hohen Auflagen erreichen sie umfangreiche Zielgruppen.

Die bisher bekannten Karten, vorzugsweise Plastikkarten, zur Speicherung von Daten weisen geeignete Speichermittel auf, wie etwa Speicherchips oder Mikroprozessoren. Um den Umgang mit den gespeicherten Daten möglichst fälschungssicher zu gestalten, sind entsprechend aufwendige maschinelle Datenerkennungs- und/oder -verarbeitungssysteme erforderlich. Sind auf solchen Speicherkarten auch visuell lesbare Informationen mit abgedruckt, z.B. Gebrauchs-, Werbehinweise, etc., so sind diese im Gegensatz zu den maschinenlesbaren Daten für jedermann - auch für einen unberechtigten Besitzer der Karte - offen zugänglich. Sie können daher nicht Träger von "geheimen" visuell lesbaren Informationen, z.B. numerische Sicherheitscodes oder dergleichen, sein.

Vor allem bei Herausgebern und Anbietern von Plastikkarten besteht jedoch ein Bedürfnis, auch visuell lesbare "geheime" Informationen sicher gegen unberechtigten Zugriff geschützt auf einer Karte zu verwahren, um hierdurch Anwendungen zu ermöglichen, die auf die teure Infrastruktur der maschinellen Datenerkennung/Verarbeitung verzichten können, - sofern diese nicht aus anderen Gründen benötigt wird.

Bisher bekannte Anwendungen, bei denen visuell lesbare Daten vor dem offenen Zugang geschützt sind, nutzen beispielsweise einfache Papierdatenträger, die in schwarz bedruckten Umhüllungen oder Umhüllungen mit "Stördrucken", wie z.B. dem "Zahlenmeer" bei PIN-Briefen für Mobilfunkkunden, in Verkehr gebracht werden. Die Nutzung solcher Datenträger mit vertraulichen visuell lesbaren Informationen ist an die Verwahrung in gut verschließenden und manipulationssicheren Umschlägen gebunden. In der Praxis kommen die verwendeten Umschläge diesen Anforderungen oft nicht nach, so die das Inverkehrbringen dieser bekannten Papierdatenträger mit einem nicht unerheblichen Risiko verbunden ist.

Aus GB-A-2 252 270 ist ferner eine Wertkarte für vorausbezahlte Werteinheiten der im Oberbegriff von Anspruch 1 beschriebenen Art bekannt. Es handelt sich um eine sog. "Prepaid" Telefonkarte, welche zwei Datenbereiche aufweist, die visuell lesbare Daten enthalten. Einer dieser Datenbereiche enthält einen numerischen Code für einen Zugang zu vorausbezahlten Telefoneinheiten, welche dem Kaufpreis bzw. Wert der Karte entsprechen. Der Zahlencode ist mit einer Abdeckung gegen unberechtigten Zugriff geschützt, nämlich in Form einer einfachen Rubbelschicht oder eines undurchsichtigen Haftetiketts. Diese Art der Abdeckung ist jedoch nicht ausreichend fälschungssicher. Außerdem besteht der Nachteil, daß beim Abrubbeln oder Abkratzen der Deckschicht der Geheimcode zerstört oder mit entfernt werden kann.

Ähnliche Datenträger sind aus der GB-A-2 305 393 und DE-U-297 03 110 bekannt.

Auf anderen Gebieten werden auch aufwendigere Abdeckungen zum Verdecken von visuell lesbaren Daten verwendet. Beispielsweise beschreibt US-A-4 738 473 kartenartige Rubbellose oder Spielscheine, auf denen Symbole aufgedruckt sind, die mit einer oder mehreren auf einer aufgeklebten Folie aus durchsichtigem Material beschichteten abrubbelbaren Deckschicht(en) verdeckt sind und die der Spieler nach Erwerb eines Spielscheines durch Abkratzen der Deckschicht(en) freilegen kann. Die transparente Folie hat die Funktion eines Transportbandes für die Rubbelschichten, welche erst am Verkaufsort auf die Spielscheine nach Codifizierung derselben anhand der transparenten Folie aufgeklebt werden.

Im Zusammenhang mit Traveller-Schecks ist aus US-A-3 950 013 eine Abdeckungsvariante bekannt, mit welcher eine erste Unterschrift beim Kauf eines Traveller-Schecks abgedeckt und beim Einlösen des Schecks zum Vergleich der ersten Unterschrift mit einer zweiten Unterschrift des Scheckinhabers wieder entfernt wird. Die Abdeckung umfaßt lediglich zwei übereinander geklappte Klebestreifen, die nacheinander abgezogen werden, so daß auch hier kein ausreichender Schutz gegen Manipulation durch unberechtigte Dritte gegeben ist. Beispielsweise können diese Klebestreifen nach geschicktem Entfernen oder Aufklappen im nachhinein ohne weiteres wieder aufgeklebt werden. Zwar verfügt die bekannte Abdeckung zusätzlich über eine transparente Unterlage, auf welcher die obengenannten Klebestreifen aufgeklebt sind. Die transparente Unterlage hat jedoch keine Sicherungsfunktion.

Des weiteren ist aus DE-A-42 06 742 ein Verfahren und eine Vorrichtung zum ganzflächigen Beschichten z.B. einer Kreditkarte mit einer transparenten nicht-ablösbaren Schutzschicht bekannt. Diese steht jedoch in keinem Zusammenhang mit einer manipulationssicheren Abdeckung.

Aus DE-A-2 126 285 und DE-A-28 19 390 sind jeweils Informationsträger bekannt, nämlich in Form von Preisschildern oder KFZ-Kennzeichen, welche zum Manipulationsschutz selber mit Stanzungen versehen sind. Diese Art von Informationsträgern weist naturgemäß keine Abdeckung zur Unsichtbarmachung der darauf befindlichen Informationen auf.

Im übrigen wurden zum Stand der Technik folgende Dokumente berücksichtigt: DE-A-41 31 964 und DE-A-2 163 376.

Die Erfindung zielt darauf ab, Wertkarten für vorausbezahlte Werteinheiten (sog. Prepaid-Card) für gehobene Sicherheitsansprüche und ein Verfahren zu deren Herstellung zur Verfügung zu stellen.

Die Erfindung erreicht dieses Ziel durch die Gegenstände der Ansprüche 1 und 9. vorteilhafte Ausführungen der Erfindung sind in den jeweils abhängigen Ansprüchen beschrieben.

Danach schafft die Erfindung einen Datenträger für visuell lesbare Daten in Form einer Wertkarte für vorausbezahlte Werteinheiten, mit: einem kartenartigen Trägerelement, das wenigstens einen Datenbereich aufweist, auf dem visuell lesbare Daten, welche einen Code für vorausbezahlte Werteinheiten darstellen, aufgebracht sind; und einer auf dem oder jedem Datenbereich angeordneten Abdekkung, die entfernbar ist. Dabei ist die Abdeckung ein auf dem Datenbereich, auf dem die Werteinheitencodes aufgebracht sind, aufgeklebtes oder aufgesiegeltes Etikett, das nur unter Zerstörung oder Beschädigung des Etiketts, welches dabei zerreißt oder sich irreversibel deformiert, vom Datenbereich entfernbar ist, - mindestens in einem Ausmaß, um die dort vorhandenen visuell lesbaren Daten freizulegen. Um besonderen Sicherheitsansprüchen nachzukommen, ist das Etikett erfindungsgemäß aus einem transparenten Material gefertigt und mit einer abrubbelund/oder abkratzbaren Deckschicht, insbesondere Farbschicht, beschichtet. Nach der Erfindung ist demnach der Datenträger selbst - ohne zusätzliche Hilfsmittel, wie Umschläge, Kuvertierungen etc. - gegen einen unberechtigten Zugriff auf die visuell lesbaren Daten geschützt. Hierfür sind die visuell lesbaren Informationen auf dem Datenträger durch einen gegen Manipulation geschützten Leseschutz abgedeckt, der nur unter Beschädigung/Zerstörung des Leseschutzes die darunterliegenden Daten freigibt, d.h. nach dem Lesen der Daten nicht wiederherstellbar ist. Ein ggf. stattgefundener unberechtigter Zugriff auf die abgedeckten Daten kann demnach durch den berechtigten Inhaber des Datenträgers jederzeit festgestellt werden. Der erfindungsgemäße Datenträger ist als verläßlicher und gegen Manipulation geschützter Träger von visuell lesbaren Sicherheitsdaten für den öffentlichen Verkehr für bestimmte Anwendungen genauso vorteilhaft und vielfältig einsetzbar, wie es z.B. bekannte Chipkarten sind, - ohne jedoch ein aufwendiges Datenerkennungs- und Verarbeitungssystem zu benötigen.

Aufbau und Abmessungen des kartenartigen Trägerelements richten sich nach der gewünschten Anwendung des Datenträgers. Die Mobilität und Einsetzbarkeit - auch die Akzeptanz beim Endverbraucher - ist besonders dann groß, wenn das Trägerelement bevorzugt nach Art einer Kreditkarte, insbesondere aus Plastik (Kunststoff), z.B. als Dünnplastikkarte oder als Hartplastikkarte, oder als ähnliche Ausführung in Papier, Pappe oder Karton ausgebildet ist.

Bei einer weiteren bevorzugten Variante ist auf dem Trägerelement des Datenträgers zusätzlich wenigstens ein Datenbereich vorgesehen, auf dem maschinenlesbare Daten, z.B. in Form von Magnetstreifen, Speicherchips oder Mikroprozessoren, vorhanden sind. Hiermit stellt die Erfindung einen Kombidatenträger sowohl für zugriffsgeschützte maschinenlesbare Daten als auch für zugriffsgeschützte visuell lesbare Daten zur Verfügung, wodurch neue Anwendungsbereiche für derartige Datenträger erschlossen werden, insbesondere als Kreditkarten- oder kreditkartenähnliche Ausführungen.

Als Leseschutz für die auf dem erfindungsgemäßen Datenträger gespeicherten visuell lesbaren Daten werden verschiedene Abdeckungsvarianten vorgeschlagen.

Bei einem Ausführungsbeispiel sind die Etiketten bevorzugt mit einer metallisierten Oberfläche, insbesondere eine Hologrammoberfläche, versehen, so daß sie sich ebenso lediglich "zerstörend", zumindest unter sichtbarer Beschädigung der Oberfläche, abziehen lassen, um mindestens die Fläche des visuell lesbaren Datenbereichs freizulegen.

All diesen Varianten ist gemeinsam, daß einerseits die Abdeckung durch den berechtigten Inhaber des Datenträgers einfach und schnell mittels Rubbeln, Kratzen oder Abziehen entfernt und die darunter liegenden Sicherheitsdaten freigelegt werden können; andererseits aber ein Unberechtigter nur durch sichtbare Beschädigung/Zerstörung der Originalabdeckung Zugang zu den Sicherheitsdaten erlangt.

Als weiteres Merkmal besonderer Sicherheit sind die zuvor beschriebenen Etiketten und/oder die Deckschichten selbst vorzugsweise zusätzlich mit Anstanzungen versehen, so daß die Etiketten und Deckschichten bei Ablöseversuchen sofort zerreißen bzw. sichtlich beschädigt werden. Der Sicherheitsstandard der Datenträger wird weiter dadurch erhöht, daß vorzugsweise die Etiketten an ihrer Oberfläche mit Stördrucken versehen sind. Diese sollen verhindern, daß die darunter liegenden visuell lesbaren "geheimen" Informationen anhand ihres Reliefs oder am Durchscheinen durch die Abdeckung erkennbar sind.

Nach Realisierung einer der beschriebenen Abdeckungsvarianten, verstärkt auch in deren Kombination, wird der erfindungsgemäße Datenträger auch einer Verwahrung geheimer Informationen höchsten Sicherheitsstandards gerecht. Es ist mit normalen Mitteln nahezu unmöglich die geheimen Informationen auf dem Datenträger sichtbar zu machen und nach der Einsichtnahme diesen Vorgang so rückgängig zu machen, daß dies nicht als Manipulation erkennbar wäre.

Der erfindungsgemäße Datenträger stellt daher eine einfach handzuhabende und besonders kostengünstige Lösung zur Verwahrung von Informationen dar, die einerseits im öffentlichen Verkehr zirkulieren und andererseits für den Berechtigten Inhaber ein schützenswertes Geheimnis darstellen. Besonders vorteilhaft ist die Verwendung des erfindungsgemäßen Werteinheitenträgers als sog. "Prepaid Card", "Value Card" oder "Calling Card" in Systemen der Telekommunikation. Dabei ist die mit Hilfe der erfindungsgemäßen Abdeckung vor unberechtigtem Zugriff geschützte visuell lesbare Information ein numerischer Code, der eine geldwerte Zugangsberechtigung für bei dem Kartenherausgeber, z.B. einem Mobilfunkprovider, verwaltete Telefoneinheiten bedeutet. Sowohl für den Kartenherausgeber, als auch für den Kartenkäufer bzw. Inhaber stellt der kartenförmige Werteinheitenträger eine organisatorisch besonders praktische und außerdem hohen Sicherheitsansprüchen gerecht werdende Lösung für den öffentlichen Umgang mit solchen Daten dar. Der hohe Sicherheitsstandard der erfindungsgemäßen Wertkarte ist im vorliegenden Anwendungsbereich umso bedeutender als der Mißbrauch auf der Grundlage des irgendwann "gelesenen" Sicherheitscodes möglich wäre, ohne die Wertkarte tatsächlich zu besitzen.

Weiterhin stellt die Erfindung ein Verfahren zum Herstellen einer derartigen Wertkarte gemäß Anspruch 9 zur Verfügung.

Die einfache Bauweise der Wertkarte läßt vorteilhaft zu, daß für das Auftragen der visuell lesbaren Sicherheitsdaten im Datenbereich des Trägerelements (sog. Personalisierung bzw. Kodierung des Datenträgers) verschiedene Technolgien anwendbar sind. Bevorzugt werden hierfür verwendet: Thermotransferdruck, Laserdruck, Ink-jet oder Laserengraving, wobei die Sicherheitsdaten nach dem Prozeß der Personalisierung, wie zuvor beschrieben, abgedeckt werden.

Ein weiterer Aspekt der Erfindung besteht in einem Verfahren zum Herstellen von derartigen Wertkarten auf einem Endlosträger, nach den Ansprüchen 12 und 13.

Bekanntlich gehört zu einem Vertrieb von solchen kartenförmigen Datenträgern auch die Anfertigung von Anschreiben, deren Personalisierung und der Datentabgleich zwischen Karte und Anschreiben. Das vorliegende Verfahren ermöglicht es auf rationelle Art, daß mit dem Endlosträger angrenzende organisatorische Aufgaben in einem Arbeitsgang mit der Bearbeitung der Wertkarte selbst erledigt werden können. Dies betrifft insbesondere das "gleichzeitige" Erzeugen von Informationsträgern, wie Anschreiben für den Empfänger der Wertkarte, Werbe- oder Gebrauchshinweise oder Balkencode-Labels, aber auch das Erzeugen eines Umschlages für das Anschreiben einschl. aufgeklebter Wertkarte.

Weitere Vorteile und Ausgestaltungen der Erfindung ergeben sich aus der nachfolgenden Beschreibung bevorzugter Ausführungsbeispiele. In der Beschreibung wird auf die beigefügte schematische Zeichnung Bezug genommen. In der Zeichnung zeigen:
- Fig. 1a, b: eine Draufsicht auf eine erfindungsgemäße Wertkarte mit einer Abdeckung für Sicherheitsdaten, und zwar mit unversehrter Originalabdeckung (Fig. la) und mit teilweise entfernter Abdeckung (Fig. 1b); und
- Fig. 2a, b, c: Draufsichten auf eine Wertkarte gemäß Fig. 1, aufgespendet auf einem Informationsträger, in mehreren Herstellungsabschnitten.

Das nachfolgend beschriebene Ausführungsbeispiel betrifft einer Wertkarte im Kreditkartenformat für visuell lesbare Sicherheitdaten, welche numerisch kodierte, vorausbezahlte Werteinheiten darstellen. Der Einfachheit halber sind in den Figuren die gleichen Merkmale mit denselben Bezugszeichen gekennzeichnet.

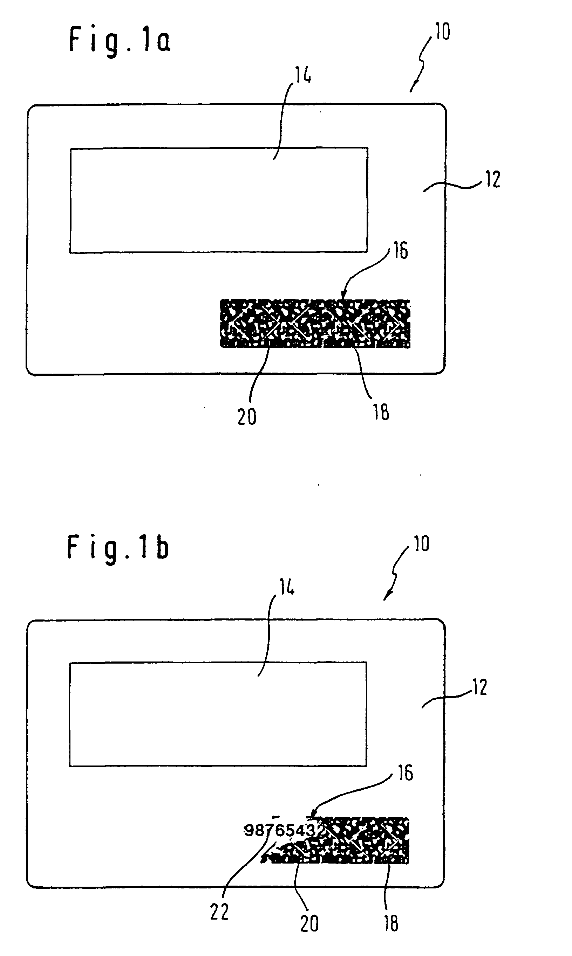

Die Figuren 1a und b zeigen jeweils eine Draufsicht (ob Vorder- oder Rückseite) einer solchen Wertkarte 10. Die Wertkarte 10 besteht aus einem kartenförmigen Trägerelement 12, das z.B. eine Dünnplastikkarte oder eine Hartplastikkarte nach ISO 7810/13 ist. Das Trägerelement 12 ist vorzugsweise aus PVC (Polyvinylchlorid) gefertigt. Es können aber auch andere Materialien, wie ABS (Acrylnitryl Butadien Styrol-Co-poylmer), PC (Polycarbonat) oder bedingt auch PE (Poly-ethylen) und PET verwendet werden. Wie in den Figuren 1a, b mit dem Abschnitt 14 angedeutet, ist die Vorder- und/oder Rückseite des Trägerelements 12. mit visuell lesbaren Werbe- und Informationshinweisen, z.B. Gebrauchshinweisen bedruckt. Bei einer hochwertigen Version der vorliegenden Wertkarte findet das Bedrucken bereits während des Herstellungprozesses des Trägerelements 12 selber statt. Die Wertkarte wird dann durch eine transparente Oberlayfolie abgedeckt, so daß die bedruckten Werbe- und/oder Informationshinweise gegen Abrieb und Manipulation geschützt sind.

Auf einer Seite (Vorder- oder Rückseite) weist das Trägerelement 12 der Wertkarte 10 gemäß Fig. 1a und b in einem Bereich rechts unten einen Abschnitt bzw. einen Datenbereich 16 für visuell lesbare Sicherheitsdaten auf. Gemäß Fig. 1a ist der Datenbereich 16 mit einem rechtekkigen, länglichen Abdeckung abgedeckt. Nach der Herstellung des Trägerelementa 12 der Werckarte 10 werden diese Sicherheitsdaten in dem Datenbereich 16 aufgebracht, z.B. im Thermotransferdruck-, Laserdruck-, Ink-jet- oder Laserengravingverfahren. Nach diesem Vorgang, der sog. Personalisierung der Wertkarte, wird der Datenbereich 16 mit der selbstklebenden Abdeckung abgedeckt.

Die in Fig. 1a dargestellte Abdeckung ist ein Haftetikett 18 bestehend aus einer transparenten Trägerfolie mit aushärtbarer Klebeschicht, das mit einer (undurchsichtigen) abrubbelbaren silbrigen Farbschicht beschichtet ist. Die Farbschicht ist ferner mit einem sog. "Stördruck" bedruckt, d.h. mit unregelmäßig schwarzen Abschnitten, so daß die Oberfläche des Haftetiketts 18 eine unregelmäßige schwarz-graue Schattierung aufweist. Das Haftetikett 18 ist außerdem mit mehreren pfeilförmigen Anstanzungen 20 versehen, die mit wechselnder Orientierung aneinandergereiht sind (in Fig. 1a und b als dünne helle Linien erkennbar).

Diese Ausgestaltung des Haftetiketts 18 macht eine Manipulation, d.h. ein unberechtigtes Lesen der Sicherheitsdaten nahezu unmöglich, ohne daß die Manipulation nicht feststellbar bliebe. Die Sicherheitsdaten können lediglich freigelegt werden, indem die Parbschicht vom Haftetiketts 18 wenigstens teilweise abgekratzt oder abgerubbelt und/oder das Haftetikett 18 wenigstens teilweise abgezogen wird. In beiden Fällen wird die Abdeckung des Datenbereichs 16 sichtbar beschädigt bzw. zerstört. Die einmal abgerubbelte Farbschicht ist mit einfachen Mitteln nicht wiederherstellbar. Auch ein Abziehen des Haftetiketts 18 führt aufgrund der Anstanzungen 20 zu einem Zerreißen des Haftetiketts selbst, was bei einem Versuch der Wiederherstellung der Abdeckung auf jeden Fall sichtbar bleibt. Als weiteres Sicherheitsmerkmal verhindert der "Stördruck" auf dem Haftetikett 18, daß die darunterliegenden Sicherheitsdaten bei aufgeklebtem Haftetikett 18 durchscheinen oder anhand ihres Reliefs, das sich gegebenenfalls auf der Oberfläche des Haftetiketts 18 abbildet, erkennbar sind.

Anhand Fig. 1b wird dies nochmals eindrucksvoll veranschaulicht. Dort ist die Wertkarte 10 gemäß Fig. 1a mit teilweise freigelegten Sicherheitsdaten, hier ein Zahlencode 22, dargestellt. Das Haftetikett 18 ist dort von links teilweise abgezogen; außerdem ist die Farbschicht auf dem Haftetikett 18 teilweise abgerubbelt. Der Zahlencode 22 ist nunmehr (teilweise) erkennbar - bei gleichzeitig sichtbarer und irreversibler Zerstörung der Originalabdeckung.

Nach einer bevorzugten Verfahrensvariante zur Herstellung einer Wertkarte gemäß Fig. 1a, b ist diese für die Verarbeitung auf einem Endlosträger in Verbindung mit sogenannten "Lettershop-Projekten" ausgelegt. Dabei werden Wertkarten 10 der zuvor beschriebenen Art nacheinander auf einem mehrfach genutzten Papier-Endlosträger aufgeklebt und gemeinsam mit diesem verarbeitet. Dies bedeutet, daß in einem Arbeitsgang mit dem Endlosträger angrenzende organisatorische Aufgaben gelöst werden können. Dies betrifft insbesondere das gemeinsame bzw. gleichzeitige Beschriften von Wertkarte 10 und Endlosträger, z.B. zum Erzeugen von Anschreiben, von beschrifteten Informationsträgern sowie auch zum Erzeugen eines Umschlages für den Versand der Wertkarte 10.

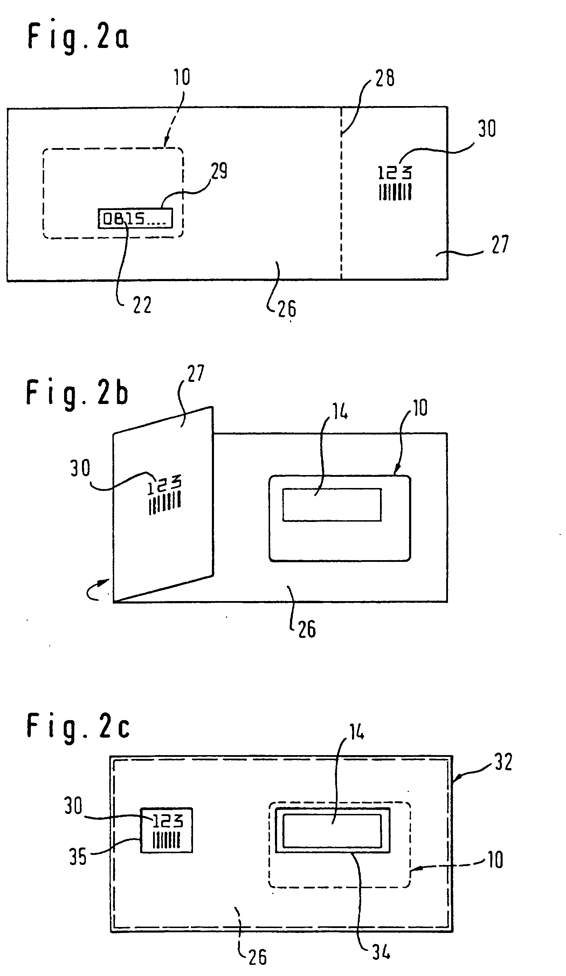

Fig. 2a zeigt ein Beispiel für einen Informationsträgerblatt 26 im Form eines Faltblattes (mit seiner Vorderseite nach unten dargestellt), so wie es bei einem solchen Endlosträger-Herstellungsverfahren erhalten wird. Auf der Vorderseite (in Fig. 2a die Rückseite) des Informationsträgers 26, der z.B. ein Anschreiben und/oder ein Gebrauchshinweis sein kann, ist eine Wertkarte 10 mit ihrer (verdeckten) Rückseite aufgeklebt, und zwar derart, daß sie durch den Empfänger des Informationsträgeres 26 rückstandsfrei entfernt werden kann. Der Informationsträger 26 weist einen Faltabschnitt 27 auf, der über einen Falz 28 mit dem übrigen Abschnitt des Informationsträgers 26 verbunden ist.

Während der Bearbeitung der auf dem Papier-Endlosträger aufgespendeten Wertkarten 10 erfolgt auch die Aufbringung der Sicherheitsdaten 22, und zwar an der auf dem Papier-Endlosträger aufliegenden Seite der Wertkarte 10, hier deren Rückseite. Hierfür sind in dem Papier-Endlosträger in regelmäßigen Abständen Durchbrüche 29 freigestanzt, durch welche hindurch die Wertkarte 10 rückseitig nach einem der zuvor beschriebenen Verfahren mit den Sicherheitsdaten 22 beschrieben (personalisiert bzw. codiert) wird. Einen solchen freigestanzten Durchbruch 29 weist demnach auch der (nach dem Ende der Bearbeitung aus dem Papier-Endlosträger geschnittene) Informationsträger 26 in Fig. 2a auf. Ebenfalls rückseitig, d.h. auf der Seite der Sicherheitscodierung 22, erfolgt während der Bearbeitung das Aufdrucken einer (ungeschützten) offenen Seriennummer 30 zusammen mit einem Barcode-Balken auf Abschnitten des Papier-Endlosträgers, welche an den Bereich der rückseitig aufgespendeten Wertkarte 10 angrenzen.

Das vorliegende Verfahren ermöglicht daher vorteilhaft eine einseitige Personalisierung einer Wertkarte zusanmmen mit einem zugehörigen Informationsträgher auf einem Papier-Endlosträger, d.h. das Aufbringen der Sicherheitskodierung 22 und der Seriennummer 30 fertigungstechnisch gesehen auf derselben Seite auf bzw. bezüglich dem/des des Endlosträger(s).

Fig. 2b zeigt den Informationsträger 26 mit aufgeklebter Wertkarte 10 von vorne. Dabei ist der die Seriennummer tragende Abschnitt 27 an dem Falz 28 nach vorne geklappt. Wie bereits vorstehend erwähnt, ist die Wertkarte 10 mit ihrer Rückseite auf dem Informationsbild 26 aufgeklebt. Auf der hier sichtbaren Vorderseite der Wertkarte 10 sind Werbe- und/oder Informationshinweise 14 aufgedruckt.

Am Ende der Bearbeitung auf dem Endlosträger wird der Informationsträger 26 samt aufgespendeten Wertkarten 10 geschnitten für die Präsentation in einem Fensterumschlag 32 mit zwei Fenstern 34, 35 an der Umschlagvorderseite, so wie er in Fig. 2c dargestellt ist. In einem weiteren Verfahrensabschnitt wird der Informationsträger 26 in der in Fig. 2b mit dem eingezeichneten Pfeil symbolisch dargestellten Weise gefaltet und in den Fensterumschlag 32 gemäß Fig. 2c kuvertiert. Dabei kommen die offen zugänglichen visuell lesbaren Daten, nämlich die Seriennummer 30 und die Kartenvorderseite mit Werbefläche 14, hinter den Fenstern 35 bzw. 34 des Umschlages 32 zu liegen, so daß sie von außen sichtbar sind.

Vorzugsweise ist die Sicherheitskodierung an der Rückseite der Wertkarte in der zuvor beschriebenen Art und Weise etikettiert; zusätzlich ist die Sicherheitskodierung aber auch durch die geschlossene Umschlagsrückseite abgedeckt und so gegen unberechtigte Kenntnisnahme geschützt.

## Patentansprüche

1. Wertkarte für vorausbezahlte Werteinheiten, mit:
a) einem kartenartigen Trägerelement (12), das wenigstens einen Datenbereich (16) aufweist, auf dem visuell lesbare Daten (22), welche einen Code für vorausbezahlte Werteinheiten darstellen, aufgebracht sind,
b) einer auf dem oder jedem Datenbereich (16) angeordneten Abdeckung, die wieder entfernbar ist,
c) wobei die Abdeckung aufweist:
c1) ein aufgeklebtes oder aufgesiegeltes Etikett (18) aus durchsichtigem Material, welches beim Entfernen zerreißt oder sich irreversibel deformiert, und
c2) eine darauf beschichtete undurchsichtige abrubbel- und/oder abkratzbare Deckschicht.

2. Wertkarte nach Anspruch 1, **dadurch gekennzeichnet, daß** das Trägerelement (12) nach Art einer Kreditkarte ausgebildet ist.

3. Wertkarte nach Anspruch 1 oder 2, **dadurch gekennzeichnet, daß** das Trägerelement (12) aus Kunststoff, z.B. als Dünnplastikkarte oder als Hartplastikkarte, oder aus Papier, Pappe oder Karton gefertigt ist.

4. Wertkarte nach einem der vorstehenden Ansprüche, **dadurch gekennzeichnet, daß** das Trägerelement (12) auch wenigstens einen Datenbereich umfaßt, auf welchem maschinenlesbare Daten gespeichert sind.

5. Wertkarte nach einem der vorstehenden Ansprüche, **dadurch gekennzeichnet, daß** das Etikett (18) mit einer metallisierten Oberfläche, insbesondere mit einer Hologrammoberfläche, versehen ist.

6. Wertkarte nach einem der vorstehenden Ansprüche, **dadurch gekennzeichnet, daß** die Deckschicht eine Farbschicht, eine heiß aufgesiegelte und/oder ausgehärtete Klebeschicht oder eine metallische Schicht ist.

7. Wertkarte nach einem der vorstehenden Ansprüche, **dadurch gekennzeichnet, daß** das Etikett (18) und/oder die Deckschicht mit mehreren Stanzungen (20) versehen sind/ist.

8. Wertkarte nach einem der vorstehenden Ansprüche, **dadurch gekennzeichnet, daß** die Oberfläche der Abdekkung mit einem eine unregelmäßige Schattierung bildenden Stördruck versehen ist.

9. Verfahren zum Herstellen einer Wertkarte nach einem der vorstehenden Ansprüche, mit folgenden Schritten:
a) Bereitstellen des kartenartigen Trägerelements (12);
b) Auftragen der visuell lesbaren Daten (20), welche einen Code für vorausbezahlte Werteinheiten darstellen, in wenigstens einem Datenbereich (16) auf dem Trägerelement (12); und
c) Abdecken des oder jedes Datenbereiches (16) mit dem aufzuklebenden oder aufzusiegelnden Etikett (18).

10. Verfahren nach Anspruch 9, **dadurch gekennzeichnet, daß** das Etikett (18) und/oder die Deckschicht mit mehreren Stanzungen (20) versehen werden/wird.

11. Verfahren nach Anspruch 9 oder 10, **dadurch gekennzeichnet, daß** die visuell lesbaren Daten (22) mit Hilfe von Thermotransferdruck, Laserdruck, Inkjet oder Laserengraving aufgetragen werden.

12. Verfahren nach einem der Ansprüche 9-11, **gekennzeichnet durch** folgende Schritte:
- Aufbringen der Wertkarten (10) auf einem Papier-Endlosträger;
- gemeinsames Beschriften oder Bedrucken der Wertkarten (10) und Papier-Endlosträger; und
- Erzeugen einzelner Informationsträger (26) aus dem Papier-Endlosträger mit jeweils wenigstens einer aufgebrachten Wertkarte (10).

13. Verfahren nach Anspruch 12, **dadurch gekennzeichnet, daß** die dem Papier-Endlosträger abgewandte Seite jeder Wertkarte (10) zusammen mit den daran angrenzenden Bereichen des Papier-Endlosträgers mit ungesicherten Daten und die dem Papier-Endlosträger zugewandte Seite jeder Wertkarte durch einen freigestanzten Durchbruch (29) des Papier-Endlosträgers hindurch mit Sicherheitsdaten (22) beschriftet wird.

## Claims

1. A prepaid card for prepaid value units, having;
a) a card-type substrate element (12), which comprises at least one data area (16), on which visually readable data (22) representing a code for prepaid value units are applied,
b) a covering disposed on the or each data area (16), which can be removed again,
c) in which the covering comprises:
c1) a stuck-on or sealed-on label (18) made from transparent material, which tears or is irreversibly deformed upon removal, and
c2) a non-transparent rub-off and/or scratch-off covering layer which is coated thereon.

2. A prepaid card according to Claim 1,
**characterised in that** the substrate element (12) is designed in the manner of a credit card.

3. A prepaid card according to Claim 1 or 2,
**characterised in that** the substrate element (12) is made from plastic, e.g. thin plastic card or rigid plastic card, or from paper, paperboard or cardboard.

4. A prepaid according to one of the preceding Claims,
**characterised in that** the substrate element (12) also comprises at least one data area on which machine-readable data are stored.

5. A prepaid card according to one of the preceding Claims,
**characterised in that** the label (18) is provided with a metallised surface, in particular with a hologram surface.

6. A prepaid card according to one of the preceding Claims,
**characterised in that** the covering layer is a coloured layer, a hot-sealed and/or hardened adhesive layer or a metallic layer.

7. A prepaid card according to one of the preceding Claims,
**characterised in that** the label (18) and/or the covering layer is/are provided with several stamped marks (20).

8. A prepaid card according to one of the preceding Claims,
**characterised in that** the surface of the covering is provided with an abnormal print forming an irregular embossment.

9. A process for the manufacture of a prepaid card according to one of the preceding Claims, having the following steps:
a) making available the card-type substrate element (12);
b) application of the visually readable data (20), which represent a code for prepaid value units, in at least one data area (16) on the substrate element (12); and
c) covering the or each data area (16) with the label (18) to be stuck or sealed on.

10. A process according to Claim 9,
**characterised in that** the label (18) and/or the covering layer is/are provided with several stamped marks (20).

11. A process according to Claim 9 or 10,
**characterised in that** the visually readable data (22) are applied with the aid of thermal transfer printing, laser printing, inkjet or laser engraving.

12. A process according to one of Claims 9-11,
**characterised by** the following steps:
- application of the prepaid cards (10) on a continuous paper backing;
- joint lettering or printing of the prepaid cards (10) and continuous paper backing; and
- production of individual information carriers (26) from the continuous paper backing each with at least one applied prepaid card (10).

13. A process according to Claim 12,
**characterised in that** the side of each prepaid card (10) facing away from the continuous paper backing together with the areas of the continuous paper backing adjacent thereto is printed with non-secured data and the side of each prepaid card facing the continuous paper backing is printed with security data (22) through a punched opening (29) of the continuous paper backing.

## Revendications

1. Carte de paiement pour unités de valeur prépayées, comprenant :
a) un élément formant support ayant la forme d'une carte (12), qui présente au moins une zone de données (16), sur laquelle sont fournies des données lisibles d'une manière visuelle (22) qui représentent un code pour des unités de valeur prépayées,
b) un élément formant écran, arrangé sur la ou sur chacune des zones de données (16), qui peut être retiré,
c) dans lequel l'élément formant écran présente :
c1) une étiquette (18), collée ou bien scellée, en matière transparente, qui, lorsqu'on la retire, se déchire ou se déforme d'une manière irréversible, et
c2) une couche protectrice non transparente, qui la recouvre, que l'on peut ôter en la frottant et/ ou en la grattant.

2. Carte de paiement conforme à la revendication 1, **caractérisée en ce que** l'élément formant support (12) est construit à la façon d'une carte de crédit.

3. Carte de paiement conforme à la revendication 1 ou à la revendication 2, **caractérisée en ce que** l'élément formant support (12) est fabriqué en matière plastique, par exemple comme une carte en matière plastique mince ou comme une carte en matière plastique dure, ou en papier, en cartonnage ou en carton.

4. Carte de paiement conforme à l'une des revendications précédentes, **caractérisée en ce que** l'élément formant support (12) comporte au moins une zone de données, sur laquelle des données lisibles par une machine sont enregistrées.

5. Carte de paiement conforme à l'une des revendications précédentes, **caractérisée en ce que** l'étiquette (18) est fournie avec une surface métallisée, en particulier avec une surface formant un hologramme.

6. Carte de paiement conforme à l'une des revendications précédentes, **caractérisée en ce que** la couche protectrice est une couche colorée, une couche de colle scellée et/ ou durcie à chaud ou une couche métallique.

7. Carte de paiement conforme à l'une des revendications précédentes, **caractérisée en ce que** l'étiquette (18) et/ ou la couche protectrice est (sont) munie(s) de plusieurs poinçonnages (20).

8. Carte de paiement conforme à l'une quelconque des revendications précédentes, **caractérisée en ce que** la surface de la couche formant écran est munie d'une impression parasite formant un motif d'ombrage irrégulier.

9. Procédé pour fabriquer une carte de paiement conforme à l'une des revendications précédentes, comprenant les étapes consistant à :
a) préparer l'élément formant support en forme de carte (12) ;
b) appliquer les données lisibles de manière visuelle (20), lesquelles représentent un code pour des unités de valeur prépayées, dans au moins une zone de données (16) sur l'élément formant support (12) ; et
c) former un écran sur la ou chacune des zones de données (16) avec l'étiquette (18) à coller ou à sceller.

10. Procédé conforme à la revendication 9, **caractérisé en ce que** l'étiquette (18) et/ ou la couche protectrice est (sont) munie(s) de plusieurs poinçonnages (20).

11. Procédé conforme à la revendication 9 ou à la revendication 10, **caractérisé en ce que** les données lisibles de manière visuelle (22) sont appliquées à l'aide d'un procédé d'impression par transfert thermique, d'impression par un laser, par un jet d'encre ou de gravure au laser.

12. Procédé conforme à l'une des revendications 9 à 11, **caractérisé par** les étapes consistant à :
- appliquer la carte de paiement (10) sur un support sans fin en papier ;
- écrire ou imprimer en même temps la carte de valeur (10) et le support sans fin en papier ; et
- fournir un seul support d'information (26) sur le support sans fin en papier avec à chaque fois au moins une carte de paiement (10) rapportée.

13. Procédé conforme à la revendication 12, **caractérisé en ce que** l'on vient inscrire des données non sécurisées sur le côté de chaque carte de paiement (10) qui est opposé au support sans fin en papier ensemble avec les zones qui forment la limite du support sans fin en papier et que l'on vient inscrire des données sécurisées (22) sur le côté de chaque carte de paiement qui est contigu au support sans fin en papier au travers d'une ouverture (29) dégagée par poinçonnage du support sans fin en papier.
